(19) Europäisches Patentamt
European Patent Office
Office européen des brevets

(11) Veröffentlichungsnummer: **0 058 299**
**B1**

(12) # EUROPÄISCHE PATENTSCHRIFT

(45) Veröffentlichungstag der Patentschrift: **10.04.85**

(51) Int. Cl.⁴: **C 08 G 77/38**, C 08 G 77/18, H 01 B 3/46

(21) Anmeldenummer: **82100294.6**

(22) Anmeldetag: **16.01.82**

(54) **Verfahren zur Herstellung von insbesondere als Elektroisolierharze verwendbaren hitzehärtbaren Siliconharzen.**

(30) Priorität: **05.02.81 DE 3103932**

(43) Veröffentlichungstag der Anmeldung: **25.08.82 Patentblatt 82/34**

(45) Bekanntmachung des Hinweises auf die Patenterteilung: **10.04.85 Patentblatt 85/15**

(84) Benannte Vertragsstaaten: **AT BE CH FR GB IT LI NL SE**

(56) Entgegenhaltungen:
**EP - A - 0 006 432**
**DE - A - 2 009 309**
**DE - A - 2 512 632**
**GB - A - 817 625**

(73) Patentinhaber: **Th. Goldschmidt AG, Goldschmidtstrasse 100 Postfach 101461, D-4300 Essen 1 (DE)**

(72) Erfinder: **Holtschmidt, Ulrich, Dr., Veddershang 11, D-4300 Essen (DE)**
Erfinder: **Koerner, Götz, Dr., Kantorie 126, D-4300 Essen (DE)**
Erfinder: **Priesch, Manfred, Cäcilienhöhe 62, D-4350 Recklinghausen (DE)**
Erfinder: **Rau, Harald, Schmettaustrasse 11, D-4300 Essen (DE)**
Erfinder: **Weitemeyer, Christian, Dr., Schellstrasse 50, D-4300 Essen (DE)**

EP 0 058 299 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von insbesondere als Elektroisolierharze verwendbaren hitzehärtbaren Siliconharzen durch Umsetzung von Alkoxysiloxanen der allgemeinen Formel

$$R_a^2Si(OR^1)_b \; | \; O_{\frac{4-(a+b)}{2}}$$

worin

$OR^1$ eine Alkoxygruppe von primären oder sekundären aliphatischen Alkoholen mit 1 bis 4 C-Atomen,

$R^2$ eine Alkyl- und/oder Phenylgruppe ist,

a einen Wert von 1,0 bis 1,5,

b einen Wert von 0,1 bis 1,0 hat,

mit niedermolekularen mehrwertigen Alkoholen bei Temperaturen von 80 bis 200°C, gegebenenfalls in Gegenwart von an sich bekannten Umesterungskatalysatoren und Lösungsmitteln, unter Entfernung des Alkohols $R^1OH$, wobei man die Alkoxysiloxane mit den Alkoholen in einem solchen Mengenverhältnis miteinander umsetzt, dass einer $SiOR^1$-Gruppe etwa eine COH-Gruppe entspricht, und man die Reaktion bei einem Umsetzungsgrad von 25 bis 80% durch Abkühlen auf eine Temperatur < 80°C abbricht.

Das im Oberbegriff des Patentanspruchs beschriebene Verfahren ist aus der DE-OS 2828990 (= EP-A-0006432) bekannt. Bei diesem Verfahren verwendet man vorzugsweise ein Siloxan, bei welchem a einen Wert von 1,2 bis 1,4 und b einen Wert von 0,3 bis 0,8 hat. Als $OR^1$-Gruppe wird vorzugsweise die Methoxygruppe gewählt. $OR^1$ kann auch die Bedeutung einer Ethoxy-, Propoxy- oder Butoxygruppe haben, wobei die Propoxy- und/oder Butoxygruppe verzweigt sein können. Im durchschnittlichen Alkoxysiloxanmolekül kann auch ein Gemisch verschiedener $OR^1$-Reste vorliegen, wobei das molare Verhältnis von Methoxyzu Alkoxyresten mit höherer Kettenlänge vorzugsweise 2,5 bis 1:1 ist.

$R^2$ ist insbesondere eine Methyl- und/oder eine Phenylgruppe. Liegen Methyl- und Phenylgruppen nebeneinander vor, ist ein molares Verhältnis von 0,4 bis 1,5:1 bevorzugt.

Das Siloxan soll vorzugsweise 10 bis 30 Mol-% Dimethylsiloxyeinheiten und 5 bis 10 Mol-% Trimethylsiloxyeinheiten aufweisen. Vorzugsweise enthält das Siloxan 50 bis 80 Mol-% Monophenylsiloxyeinheiten.

Als Umesterungskatalysatoren werden insbesondere Titanester oder Kobaltsalze organischer Säuren oder Sulfonsäuren, wie p-Toluolsulfonsäure oder Benzolsulfonsäure, verwendet.

Diese bekannten Siliconharze haben sehr gute Thermostabilität und Elastizität sowie eine hohe Haftung auf metallischem Untergrund. Ein besonderer Vorteil der ausgehärteten Harze besteht in ihrem minimalen Gewichtsverlust bei thermischer Belastung. Die beschriebenen Siliconharze lassen sich deshalb insbesondere in der Elektroindustrie verwenden.

Es hat sich jedoch gezeigt, dass sich die anwendungstechnischen Eigenschaften dieser Harze, insbesondere bei Verwendung in der Elektroindustrie, noch verbessern lassen. Dies gilt für die Flexibilität der Filme aus ausgehärtetem Harz (bestimmt im Dornbiegetest nach DIN 53152) und für die Haftung der Harze sowohl gegenüber mineralischen Grenzflächen, wie z.B. feinteiligem Glimmer, als auch gegenüber metallischem Untergrund, insbesondere Kupfer.

Diese der Erfindung zugrundeliegende Verbesserung der Eigenschaften lässt sich dadurch erreichen, dass man als niedermolekulare mehrwertige Alkohole ein Gemisch, bestehend aus

| | | |
|---|---|---|
| a) | 25 bis 95 Mol-% | Hydroxypivalinsäureneopentylglykolester und |
| b) | 75 bis 5 Mol-% | eines niedermolekularen, mindestens dreiwertigen Alkohols |

mit den Alkoxysiloxanen umsetzt.

Der verwendete Hydroxypivalinsäureneopentylglykolester entspricht der Formel

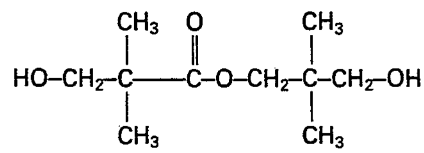

Als niedermolekulare, mindestens dreiwertige Alkohole (Komponent b) werden vorzugsweise solche Alkohole verwendet, bei denen die Hydroxylgruppen als primär gebundene Hydroxylgruppen vorliegen. Beispiele derartiger niedermolekularer, mindestens dreiwertiger Alkohole sind Trimethylolethan, Trimethylolpropan und Pentaerythrit.

Das Verhältnis der Komponente a) zur Komponente b) kann innerhalb relativ weiter Grenzen schwanken. Man erhält Produkte der geforderten Eigenschaften bei Einhaltung einer Relation von 25 bis 95 Mol-% der Komponente a) und 75 bis 5 Mol-% der Komponente b). Besonders bevorzugt werden bei der Umsetzung Gemische verwendet, bei denen die Komponente a) zu 40 bis 80 Mol-% und die Komponente b) entsprechend zu 60 bis 20 Mol-% enthalten ist.

Zusätzlich zu den Komponenten a) und b) kann man noch eine hydroxylgruppenhaltige Komponente c) verwenden, welche im Alkoholgemisch bis zu 50 Mol-% enthalten sein kann und aus zweiwertigen Alkoholen, wie z.B. 1.2-Dihydroxyethan, besteht.

Als Siloxane können die Siloxane verwendet werden, die aus dem Stand der Technik bekannt sind und insbesondere in der DE-OS 2828990 beschrieben sind. Es handelt sich dabei um Siloxane der allgemeinen Formel

$$R_a^2Si(OR^1)_b \; | \; O_{\frac{4-(a+b)}{2}}$$

worin

$OR^1$ eine Alkoxygruppe von primären oder sekundären aliphatischen Alkoholen mit 1 bis 4 C-Atomen,

$R^2$ eine Alkyl- und/oder Phenylgruppe ist,
a einen Wert von 1,0 bis 1,5,
b einen Wert von 0,1 bis 1,0 hat.

Als $OR^1$-Gruppen kommen die Methoxy-, Ethoxy-, n- oder iso-Propoxy- sowie n- oder iso-Butoxygruppen in Frage. Besonders bevorzugt ist die Methoxygruppe.

$R^2$ bedeutet Alkyl und/oder Phenylgruppen. Als Alkylgruppen sind insbesondere die niederen Alkylgruppen mit 1 bis 4 C-Atomen, besonders die Methylgruppe, bevorzugt. Es können jedoch auch höhere Alkylgruppen vorhanden sein, z.B. Alkylgruppen mit bis zu 18 Kohlenstoffatomen. Diese werden in der Regel nicht als alleinige $R^1$-Gruppen verwendet, sondern liegen neben niederen Alkylgruppen, insbesondere Methylgruppen, vor.

Besonders bevorzugt sind Siliconharze, bei denen $R^1$ sowohl die Bedeutung einer Methyl- wie auch einer Phenylgruppe hat. Dabei ist ein molares Verhältnis von Methyl- zu Phenylgruppen von 0,4 bis 1,5:1, insbesondere von 0,75:1,25, besonders bevorzugt. Der Verzweigungsgrad des Siliconharzes wird seitens des Siloxans durch die Indices a und b bestimmt. a hat einen Wert von 1,0 bis 1,5, vorzugsweise einen Wert von 1,2 bis 1,4. b hat einen Wert von 0,1 bis 1,0, vorzugsweise einen Wert von 0,3 bis 0,8.

Innerhalb der siliciumorganischen Reaktionskomponente sind die Verbindungen bevorzugt, welche 10 bis 30 Mol-% Dimethylsiloxyeinheiten und 5 bis 10 Mol-% Trimethylsiloxyeinheiten haben. Insbesondere bevorzugt sind solche Verbindungen, welche ausserdem noch 50 bis 80 Mol-% Monophenylsiloxyeinheiten aufweisen. Die Siloxane der allgemeinen Formel

$$R_a^2Si(OR^1)_b \mid O_{\frac{4-(a+b)}{2}}$$

lassen sich beispielsweise durch folgende durchschnittliche Strukturformeln wiedergeben

$$[C_6H_5]_{0,8}\,[(CH_3)_2]_{0,15}\,[(CH_3)_3]_{0,05}\ -Si-(OCH_3)_b\,; \quad \mid O_{\frac{4-(1,25+b)}{2}}$$

$$[C_6H_5]_{0,53}\,[CH_3]_{0,27}\,[(CH_3)_2]_{0,1}\,[(CH_3)_3]_{0,1}\ -Si-(OCH_3)_b\,; \quad \mid O_{\frac{4-(1,3+b)}{2}}$$

$$[C_6H_5]_{0,113}\,[CH_3]_{0,674}\,[(CH_3)_2]_{0,113}\,[(CH_3)_3]_{0,1}\ -Si \begin{cases} (OCH_3)_{b_1} \\ (OC_3H_7\text{-}i)_{b_2} \\ O_{\frac{4-(1,31+b_1+b_2)}{2}} \end{cases}$$

wobei $b_1 + b_2 = b$ ist;

$$[C_6H_5]_{0,32}\,[CH_3]_{0,53}\,[(CH_3)_2]_{0,05}\,[(CH_3)_3]_{0,1}\ -Si-(OCH_3)_b \quad \mid O_{\frac{4-(1,25+b)}{2}}$$

Die Umsetzung wird bei erhöhter Temperatur durchgeführt. Es haben sich dabei Temperaturen von 80 bis 200°C als zur Durchführung der Reaktion besonders geeignet erwiesen. Die Reaktion kann durch an sich bekannte Umesterungskatalysatoren beschleunigt werden. Derartige Katalysatoren sind z.B. Titanester, wie Butyltitanat, sowie Kobaltsalze organischer Säuren, wie Kobaltoctoat. Geeignet sind ferner Sulfonsäuren, wie p-Toluolsulfonsäure oder Benzolsulfonsäure. Die Zugabe eines Katalysators ist jedoch nicht zwingend notwendig.

Die Reaktion kann in Gegenwart von Lösungsmitteln, wie z.B. aromatischen Lösungsmitteln z.B. Xylol, Toluol, oder Estern wie Ethylglykolacetat, oder Ketonen wie Cyclohexanon und deren Gemischen, durchgeführt werden. Diese Lösungsmittel können im Verfahrensprodukt verbleiben bzw. bis zu einem gewünschten Restgehalt abdestilliert werden.

Wesentlich ist bei dem erfindungsgemässen Verfahren, dass die Reaktion durch Abkühlen abgebrochen wird, wenn der Umsetzungsgrad 25 bis 80%, vorzugsweise 40 bis 65%, erreicht hat. Dieser Umsetzungsgrad lässt sich durch Bestimmung der freigesetzten Alkoholmenge $R^1OH$ bestimmen.

Das Verfahrensprodukt lässt sich in an sich bekannter Weise, insbesondere bei erhöhten Temperaturen, wie z.B. 200 bis 250°C, aushärten. Das Verfahrensprodukt selbst ist bis zu seiner Aushärtung praktisch unbegrenzt lagerfähig, was sich

aus der Viskositätskonstanz des in einem Lösungsmittel gelösten Harzes während einer längeren Lagerzeit feststellen lässt.

Die nach dem erfindungsgemässen Verfahren hergestellten Harze lassen sich mit Vorteil in der Elektroindustrie, insbesondere zur Isolierung von Generatoren, Transformatoren und dergleichen, verwenden. Sie zeigen die geforderte hohe Elastizität bei ausgezeichneter Haftung insbesondere auf Kupferflächen. Die Harze lassen sich mit Füllstoffen, insbesondere mineralischen Füllstoffen, wie z.B. Glimmerpulver, füllen und zu Formkörpern, wie Platten und dergleichen, verarbeiten. Man kann mit diesen Harzen auch Trägerbahnen, insbesondere aus Glasfaservliesen und/oder Glimmerplatten, tränken und beschichten und zu Platten mit guten elastischen Eigenschaften unter Formgebung aushärten.

Es war für den Fachmann überraschend, dass bei der Verwendung des speziellen Gemisches niedermolekularer mehrwertiger Alkohole bei dem an sich bekannten Verfahren Harze dieser Eigenschaften entstehen. Verwendet man Hydroxypivalinsäureneopentylglykolester als einzige alkoholische Komponente, erhält man trübe, inhomogene Umsetzungsprodukte, die sich nicht zu klebfreien Produkten aushärten lassen. Verwendet man andererseits die Komponente b), gegebenenfalls in Verbindung mit der Komponente c), ohne den Hydroxypivalinsäureneopentylglykolester als Veresterungskomponente, erhält man zwar bereits lufttrocknende Harze, die jedoch zu sehr spröden Filmen aushärten und ausserdem eine schlechte Haftung auf Kupferoberflächen aufweisen.

Es war nicht vorherzusehen, dass durch die Kombination der Komponenten a), b) und gegebenenfalls c) die der Erfindung zugrunde liegende Aufgabe gelöst werden konnte und Harze der geforderten Eigenschaften erhältlich sind. Nicht vorherzusehen war ferner, dass der Gewichtsverlust nach Wärmebehandlung bei den erfindungsgemässen Produkten nur unwesentlich höher liegt als bei den Verfahrensprodukten der DE-OS 2828990, obgleich bei den erfindungsgemässen Produkten der organische Anteil gegenüber dem Siliconanteil erheblich höher liegt als bei den Verfahrensprodukten der DE-OS 2828990.

In den folgenden Beispielen werden das erfindungsgemässe Verfahren und die Eigenschaften der nach dem Verfahren erhaltenen Produkte noch näher erläutert. Anhand eines Vergleichsbeispiels wird gezeigt, dass bei Verwendung von Hydroxypivalinsäureneopentylglykolester als alleinige Veresterungskomponente nicht verwendbare Produkte entstehen.

Beispiel 1 (nicht erfindungsgemäss)

350 g eines Phenyl-Methyl-Methoxypolysiloxans (1,68 Mol $-OCH_3$) der Formel

$$(C_6H_5)_{0,73}(CH_3)_{0,58}-\underset{\displaystyle O_{1,035}}{\underset{|}{Si}}-(OCH_3)_{0,62}$$

werden mit 233 g Xylol, 172 g Hydroxypivalinsäureneopentylglykolester (0,84 Mol) und 0,5 g Butyltitanat unter Rühren in einer Destillationsapparatur auf 130°C erhitzt. Innerhalb 1 h werden 55 g Destillat abgenommen.

In dieser Zeit steigt die Temperatur bis auf 145°C an. Nach Erreichen der gewünschten Viskosität wird die Reaktion durch Abkühlen abgebrochen und mit Methylethylketon ein Festkörper von 60% eingestellt. Der Reaktionsumsatz liegt, berechnet nach der Menge Methanol im Destillat, bei 61%. Das Endprodukt hat eine Viskosität von 350 $mm^2$/sek (cSt) bei 25°C und weist eine unerwünschte Trübung auf.

Beispiel 2 (nicht erfindungsgemäss)

350 g eines Phenyl-Methyl-Methoxypolysiloxans (0,9 Mol $-OCH_3$) der Formel

$$(C_6H_5)_{0,71}(CH_3)_{0,62}-\underset{\displaystyle O_{1,18}}{\underset{|}{Si}}-(OCH_3)_{0,31}$$

werden mit 6,2 g 1.2-Dihydroxyethan (0,1 Mol), 31,2 g 1.1.1-Trimethylolpropan (0,233 Mol) und 1 g Butyltitanat wie unter Beispiel 1 beschrieben umgesetzt. Es wird ein Umsatz von 51% erreicht. Das mit Xylol auf 50% Festkörper eingestellte Endprodukt weist bei 25°C eine Viskosität von 59 $mm^2$/sek (cSt) auf.

Beispiel 3 (erfindungsgemäss)

350 g eines Phenyl-Methyl-Methoxypolysiloxans (1,4 Mol $-OCH_3$) der Formel

$$(C_6H_5)_{0,73}(CH_3)_{0,58}-\underset{\displaystyle O_{1,095}}{\underset{|}{Si}}-(OCH_3)_{0,5}$$

werden mit 31 g 1.1.1-Trimethylolpropan (0,233 Mol), 71,4 g Hydroxypivalinsäureneopentylglykolester (0,35 Mol), 233 g Toluol und 1 g Butyltitanat in einer Destillationsapparatur auf 100°C erhitzt. Innerhalb 1,5 h werden 110 g Destillat abgenommen. Die Temperatur steigt in dieser Zeit bis auf 118°C. Nach Erreichen der gewünschten Viskosität wird die Reaktion durch Abkühlen abgebrochen und mit Diisobutylketon ein Festkörper von 50% eingestellt. Der Reaktionsumsatz liegt, berechnet nach der Menge Methanol im Destillat, bei 58%. Das Endprodukt hat eine Viskosität von 27 $mm^2$/sek (cSt) bei 25°C.

Beispiel 4 (erfindungsgemäss)

350 g des Phenyl-Methyl-Methoxypolysiloxans (1,4 Mol $-OCH_3$) aus Beispiel 3 werden mit 14,3 g 1.2-Dihydroxyethan (0,23 Mol), 20,6 g 1.1.1.-Trimethylolpropan (0,16 Mol), 47,2 g Hydroxypivalinsäureneopentylglykolester (0,23 Mol), 117 g Ethylglykolacetat und 0,2 g Butyltitanat in einer Destillationsapparatur auf 150°C erhitzt. Innerhalb 45 min werden 40 g Destillat abgenommen. Die Temperatur steigt auf 163°C. Nach Erreichen der gewünschten Viskosität wird die Reaktion durch Abkühlen abgebrochen und mit Methylethylketon ein Festkörper von 50% eingestellt. Der Reaktions-

umsatz liegt bei 55%. Das Endprodukt hat eine Viskosität von 31 mm²/sek (cSt) bei 25°C.

Beispiel 5 (erfindungsgemäss)

350 g des Phenyl-Methyl-Methoxypolysiloxans (1,4 Mol $-OCH_3$) aus Beispiel 3 werden mit 18,7 g 1.1.1.-Trimethylolethan (0,16 Mol), 94,7 g Hydroxypivalinsäureneopentylglykolester (0,46 Mol), 233 g Toluol und 1 g Butyltitanat wie in Beispiel 3 beschrieben umgesetzt. Es wird ein Umsatz von 48% erreicht. Das mit Methylethylketon auf 50% Festkörper eingestellte Endprodukt weist bei 25°C eine Viskosität von 18 mm²/sek (cSt) auf.

Anwendungstechnische Prüfung

Die Bindemittel der Beispiele 1 bis 5 werden wie folgt geprüft:

Auf ein gut gereinigtes Kupferblech (die Reinigung erfolgt durch Waschen mit Methylethylketon bei Raumtemperatur) wird mit einer Lackrakel ein Nassfilm von 60 µm aufgebracht. Die Aushärtung erfolgt 60 min lang bei 200°C. Die Schichtdicke des eingebrannten Lackfilmes beträgt ca. 30 µm.

Die Messergebnisse über Haftung (Gitterschnitt nach DIN 53 151), Elastizität (Dornbiegetest nach DIN 53 152) und Gewichtsverlust gemäss VDE 0360/Teil 2 in % nach 1000 Stunden Wärmebehandlung bei 200°C sind nachfolgender Tabelle zu entnehmen.

Es zeigt sich, dass die erfindungsgemässen Beispiele 3, 4 und 5 zu Lackschichten mit guten Endeigenschaften führen, während das Produkt nach Beispiel 1 einen opaken, noch klebrigen Lackfilm ergibt und ein Lackfilm nach Beispiel 2 sowohl im Gitterschnitt als auch im Dornbiegetest schlechte Ergebnisse liefert. Erwartungsgemäss erhöht sich der Gewichtsverlust in den Beispielen 3, 4 und 5 infolge des höheren organischen Anteils, jedoch ist überraschenderweise die Erhöhung des Gewichtsverlustes bei den erfindungsgemässen Bindemitteln relativ gering, verglichen mit den aus Beispiel 2 resultierenden Messwerten.

Tabelle

| Harz aus Beispiel | Haftung Gitterschnitt nach DIN 53 151 | Elastizität Dornbiegetest nach DIN 53 152 | Gewichtsverlust nach VDE 0360/Teil 2 % nach 1000 Stunden bei 200°C |
|---|---|---|---|
| 1 nicht erfindungsgemäss | die Lackfilme sind klebrig; Prüfung nicht möglich | | |
| 2 nicht erfindungsgemäss | Gt 4 bis 5 | 10 mm | 5,7 |
| 3 erfindungsgemäss | Gt 1 | 3 mm | 9,2 |
| 4 erfindungsgemäss | Gt 1 bis 2 | 5 mm | 9,7 |
| 5 erfindungsgemäss | Gt 0 bis 1 | 2 mm | 8,6 |

**Patentansprüche**

1. Verfahren zur Herstellung von insbesondere als Elektroisolierharze verwendbaren hitzehärtbaren Siliconharzen durch Umsetzung von Alkoxysiloxanen der allgemeinen Formel

$$\begin{array}{c} R_a^2Si(OR^1)_b \\ | \\ O_{\frac{4-(a+b)}{2}} \end{array}$$

worin

$OR^1$ eine Alkoxygruppe von primären oder sekundären aliphatischen Alkoholen mit 1 bis 4 C-Atomen,

$R^2$ eine Alkyl- und/oder Phenylgruppe ist,

a einen Wert von 1,0 bis 1,5,

b einen Wert von 0,1 bis 1,0 hat,

mit niedermolekularen mehrwertigen Alkoholen bei Temperaturen von 80 bis 200°C, gegebenenfalls in Gegenwart von an sich bekannten Umesterungskatalysatoren und Lösungsmitteln, unter Entfernung des Alkohols $R^1OH$, wobei man die Alkoxysiloxane mit den Alkoholen in einem solchen Mengenverhältnis miteinander umsetzt, dass einer $SiOR^1$-Gruppe etwa eine COH-Gruppe entspricht, und man die Reaktion bei einem Umsetzungsgrad von 25 bis 80% durch Abkühlen auf eine Temperatur < 80°C abbricht, dadurch gekennzeichnet, dass man als niedermolekulare mehrwertige Alkohole ein Gemisch, bestehend aus

a) 25 bis 95 Mol-% Hydroxypivalinsäureneopentylglykolester und
b) 75 bis 5 Mol-% eines niedermolekularen, mindestens dreiwertigen Alkohols

mit den Alkoxysiloxanen umsetzt.

2. Verfahren nach Anspruch 1, dadurch gekennzeichnet, dass man die Umsetzung mit einem Gemisch bestehend aus

a) 40 bis 80 Mol-% Hydroxypivalinsäureneopentylglykolester und
b) 60 bis 20 Mol-% eines niedermolekularen, mindestens dreiwertigen Alkohols

durchführt.

3. Verfahren nach Anspruch 1 oder 2, dadurch gekennzeichnet, dass man die Reaktion mit einem Gemisch durchführt, bei dem die Komponente b) ein vorwiegend primäre OH-Gruppen aufweisender Alkohol ist.

4. Verfahren nach Anspruch 3, dadurch gekennzeichnet, dass die Komponente b) Trimethylolethan, Trimethylolpropan oder Pentaerythrit ist.

5. Verfahren nach einem oder mehreren der vorhergehenden Ansprüche, dadurch gekennzeichnet, dass man die Umsetzung mit einem Gemisch niedermolekularer mehrwertiger Alkohole durchführt, welches zusätzlich als Komponente c) bis zu 50 Mol-% eines zweiwertigen Alkohols enthält.

## Claims

1. Process for the preparation of heat-curable silicone resins, which can in particular be used as electrical insulating resins, by the action of alkoxysiloxanes of the general formula

$$\begin{array}{l} R_a{}^2Si(OR^1)_b \\ \quad | \\ \quad O_{\frac{4-(a+b)}{2}} \end{array}$$

wherein

$OR^1$ is an alkoxy group of primary of secondary aliphatic alcohols having 1 to 4 C atoms,
$R^2$ is an alkyl and/or phenyl group,
a has a value of 1.0 to 1.5 and
b has a value of 0,1 to 1.0,

with low molecular polyhydric alcohols at temperatures of 80 to 200°C, if appropriate in the presence of trans-esterification catalysts known per se and of solvents, with removal of the alcohol $R^1OH$, the alkoxysiloxanes being reacted with the alcohols in a ratio such that approximately one COH groups corresponds to one $SiOR^1$ group, and the reaction being stopped at a degree of conversion of 25 to 80% by cooling to a temperature of < 80°C, characterised in that the low molecular polyhydric alcohols reacted with the alkoxysiloxanes are a mixture consisting of

| | | |
|---|---|---|
| a) | 25 to 95 mole% | of neopentyl glycol hydroxypivalate and |
| b) | 75 to 5 mole% | of a low molecular at least trihydric alcohol. |

2. Process according to claim 1, characterised in that the reaction is carried out with a mixture consisting of

| | | |
|---|---|---|
| a) | 40 to 80 mole% | of neopentyl glycol hydroxypivalate and |
| b) | 60 to 20 mole% | of a low molecular at least trihydric alcohol. |

3. Process according to claim 1 or 2, characterised in that the reaction is carried out with a mixture in which component b) is an alcohol having predominant primary OH groups.

4. Process according to claim 3, characterised in that component b) is trimethylolethane, trimethylolpropane or pentaerythritol.

5. Process according to one or more of the preceding claims, characterised in that the reaction is carried out with a mixture of low molecular polyhydric alcohols which additionally contains, as component c), up to 50 mole% of a dihydric alcohol.

## Revendications

1. Procédé de fabrication de résines silicones durcissables à chaud, en particulier pour utilisation comme résines d'isolation électrique, par réaction d'alcoxysiloxanes de formule générale

$$\begin{array}{l} R_a{}^2Si(OR^1)_b \\ \quad | \\ \quad O_{\frac{4-(a+b)}{2}} \end{array}$$

où

$OR^1$ est un groupe alcoxy d'alcools aliphatiques primaires ou secondaires à 1 à 4 atomes de carbone,
$R^2$ est un groupe alkyle et/ou phényle,
a a une valeur de 1,0 à 1,5,
b a une valeur de 0,1 à 1,0,

avec des polyalcools à faible masse moléculaire à des températures de 80 à 200°C, éventuellement en présence de catalysateurs de trans-estérification connus en soi et de solvants, sous élimination de l'alcool $R^1OH$, ce à l'occasion de quoi on fait réagir les uns sur les autres les alcoxysiloxanes et les alcools selon un rapport pondéral tel qu'environ un groupe COH correspond à un groupe $SiOR^1$, et que l'on interrompt la réaction, pour un taux de conversion de 25 à 80°C, par refroidissement à une température inférieure à 80°C, caractérisé en ce qu'on fait réagir en tant que polyalcools à faible masse moléculaire un mélange constituté

| | |
|---|---|
| a) de 25 à 95% molaire | de l'ester néopentylglycolique de l'acide hydroxypivalique, et |
| b) de 75 à 5% molaire | d'un alcool à faible masse moléculaire, au moins trivalent, |

sur les alcoxysiloxanes.

2. Procédé selon la revendication 1, caractérisé en ce qu'on réalise la réaction à l'aide d'un mélange constitué

| | |
|---|---|
| a) de 40 à 80% molaire | de l'ester néopentylglycolique de l'acide hydroxypivalique, et |
| b) de 60 à 20% molaire | d'un alcool à faible masse moléculaire, au moins trivalent. |

3. Procédé selon la revendication 1 ou 2, caractérisé en ce qu'on réalise la réaction avec un mélange dans lequel le composant b) est un alcool présentant essentiellement des groupes OH primaires.

4. Procédé selon la revendication 3, caractérisé en ce que le composant b) est le triméthylolétane, le triméthylolpropane ou le pentaérythritol.

5. Procédé selon une ou plusieurs des revendications 1 à 4, caractérisé en ce qu'on réalise la réaction avec un mélange de polyalcools à faible masse moléculaire, lequel contient en outre en tant que composant c) jusqu'à 50% molaire d'un bialcool.